# EUROPEAN PATENT APPLICATION

(11) **EP 2 109 081 A1**
(43) Date of publication of application: **14.10.2009**
(21) Application number: 08251407.6
(22) Date of filing: 11.04.2008
(51) Int. Cl.: G06T 7/20

(54) **A method of tracking a region of interest in a sequence of video frames**

(71) Applicant: Tektronix International Sales GmbH, 8212 Neuhausen am Rheinfall Schaffhausen (CH)
(72) Inventor: Barton, Oliver James, Newport, South Wales NP20 3PX (GB); Elangovan, Premkumar, c/o Tektronix UK Ltd, Bristol BS1 6PL (GB)
(74) Representative: Howell, Matthew Dafydd

(57) **Abstract**

A method of tracking a region of interest in a sequence of video frames, the method comprising performing a search to locate a region of interest (52) in a first frame (50) of the sequence and performing a search to locate a corresponding region of interest in a subsequent frame (60) of the sequence, characterised in that the search in the subsequent frame (60) is commenced in an area of the subsequent frame (60) which relates to an area in the first frame (50) in which a region of interest (52) was identified by the search of the first frame (50).

## Description

The present invention relates to a method of tracking a region of interest in a sequence of video frames.

In the field of video processing, there are many applications which require a video frame, or a sequence of video frames, to be processed to determine or assess a property of the frame or sequence of frames. For example, a video frame may be classified as interlaced or progressive on the basis of such a processing operation. In many such operations processing of the entire frame is not necessary as a result (for example an interlaced/progressive classification) can be obtained by processing only part of the frame containing relevant information. This is known as Region of Interest (ROI) processing, and is used to reduce the processing time required to obtain a result for the frame being processed. The region of interest may be related to the content of the video frame, or it may relate to an artefact of the frame such as inter-field motion.

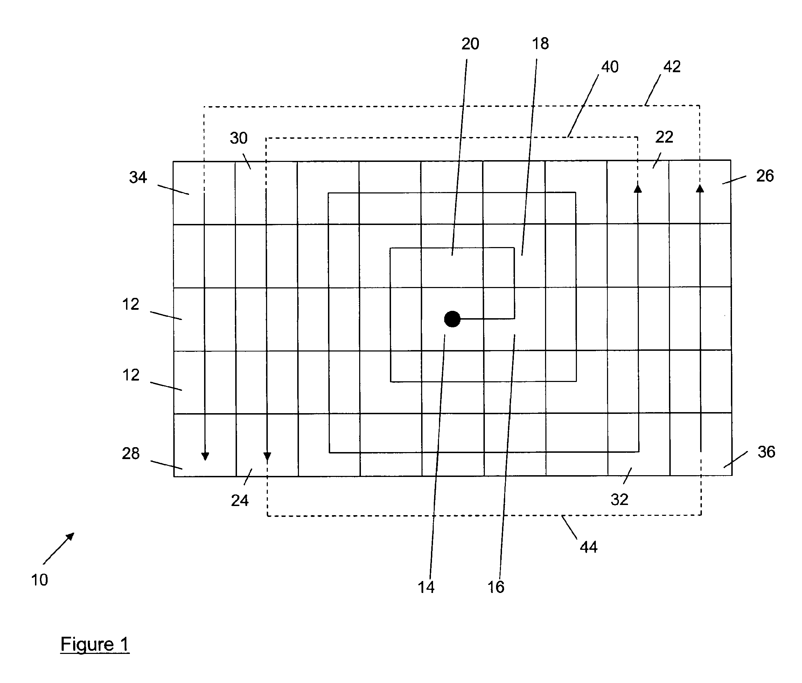

Typically, a region of interest is identified by processing blocks of pixels of the frame in turn until one or more of the blocks is deemed to meet some criteria indicating that it comprises or is part of a region of interest. The blocks may be, for example, square blocks containing 4096 pixels (i.e. 64 pixels by 64 pixels). A spiral search method is often used to identify a region of interest, whereby a block in or towards the centre of the frame is processed initially, followed by further blocks in an increasing spiral, as is shown in Figure 1.

If the region of interest is to be tracked in subsequent frames in a sequence of video frames, the spiral search method is typically used to locate the region of interest in each subsequent frame, and this can lead to unnecessarily long processing times as the region of interest is identified.

According to a first aspect of the invention, there is provided a method of tracking a region of interest in a sequence of video frames, the method comprising performing a search to locate a region of interest in a first frame of the sequence and performing a search to locate a corresponding region of interest in a subsequent frame of the sequence, characterised in that the search in the subsequent frame is commenced in an area of the subsequent frame which relates to an area in the first frame in which a region of interest was identified by the search of the first frame.

The search of the subsequent frame may be commenced at a position corresponding to a position at which a region of interest was identified by the search of the first frame.

The search of the first frame may terminate when a region of interest is identified.

The search of the first frame and the search of the subsequent frame may comprise spiral searches.

The search of the subsequent frame may commence in a direction corresponding to a direction of the search of the first frame when the search of the first frame terminated.

The searches of the first frame and of the subsequent frame are preferably performed in relation to blocks of pixels of each of the first and subsequent frames.

According to a second aspect of the invention, there is provided a computer program for performing the method of the first aspect.

Embodiments of the invention will now be described, strictly by way of example only, with reference to the accompanying drawings, of which
Figure 1 is a schematic illustration of a known spiral search method;
Figure 2 is a schematic illustration showing a spiral search used to locate a region of interest in a first video frame of a video sequence;
Figure 3 is a schematic illustration showing a spiral search used to locate the region of interest of Figure 2 in a subsequent frame using the method of the invention; and
Figure 4 is a schematic illustration showing a spiral search used to locate the region of interest of Figure 2 in a subsequent frame using an alternative embodiment of the method of the invention.

Referring first to Figure 1, there is shown a schematic representation of a known spiral search method, which may be used to identify a region of interest such as inter-field motion in a video frame. In Figure 1 a video frame is shown at 10 and can be thought of as being made up of blocks 12, each of the blocks comprising a number of pixels. In the known spiral search method the search typically commences at a block 14 in or towards the centre of the video frame because the region of interest is more likely to be located in a central portion of the video frame 10 than in an outer portion. Thus, the central block 14 of pixels is processed using appropriate algorithms to determine whether it contains a region of interest. If no region of interest is found in the central block an adjacent block 16 is processed to determine whether it contains a region of interest. In the example shown in Figure 1, the block 16 is located to the right of the central block 14, but it will be appreciated that any adjacent block may be selected for processing.

If no region of interest is found in the block 16 the search changes direction and a further block 18, which in this example is located above the block 16, is processed. If no region of interest is found in the block 18 the search moves to an adjacent block 20, which is processed to determine whether it contains a region of interest. The blocks of the video frame 10 are processed in turn, with the search method following an outwardly extending spiral path through the blocks until a region of interest is identified, at which point the search may stop. Alternatively, the position of the region of interest may be recorded before the search recommences in order to identify further regions of interest in the video frame 10.

In the event that the spiral path followed by the search reaches an edge of the video frame 10, as occurs at blocks 22, 24, 26, 28, the search recommences in the next unsearched block, as if the spiral path had not been broken, as indicated by dashed lines 40, 42 and 44 in Figure 1. Thus, when block 2 has been processed, the search moves onto block 30, whilst processing of block 24 is followed by processing of block 36.

This spiral search method is an efficient way of processing a single video frame to identify one or more regions of interest. However, where a sequence of video frames must be processed, to identify a region of interest in a first frame and track that region of interest in one or more subsequent frames, performing a spiral search commencing at a central block of the or each subsequent frame to identify the region of interest can take an unnecessarily long time.

In most cases where a region of interest occurs in a sequence of video frames, the regions of interest between frames are spatially correlated, that is to say the region of interest in a subsequent frame is located in the same or a similar area of the frame as the region of interest in a first frame. Successive frames in a sequence of video frames generally do not differ by a large amount, and the displacement of regions of interest between successive frames in a sequence is usually small. The present invention makes use of these properties to reduce the time taken to identify a region of interest in a subsequent frame of a video sequence, thus reducing the processing resources required to process the sequence and the power consumption of a device on which the method runs.

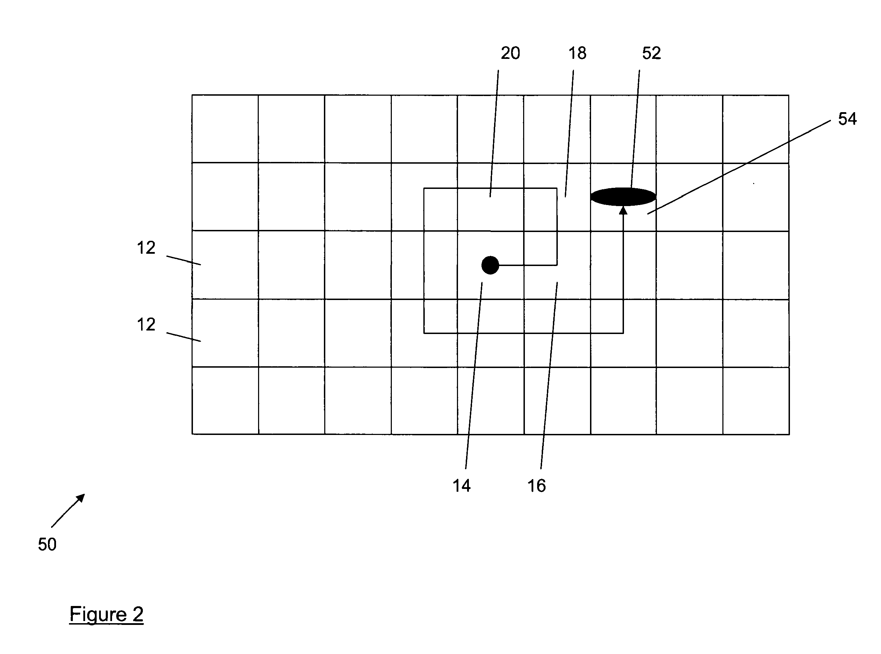

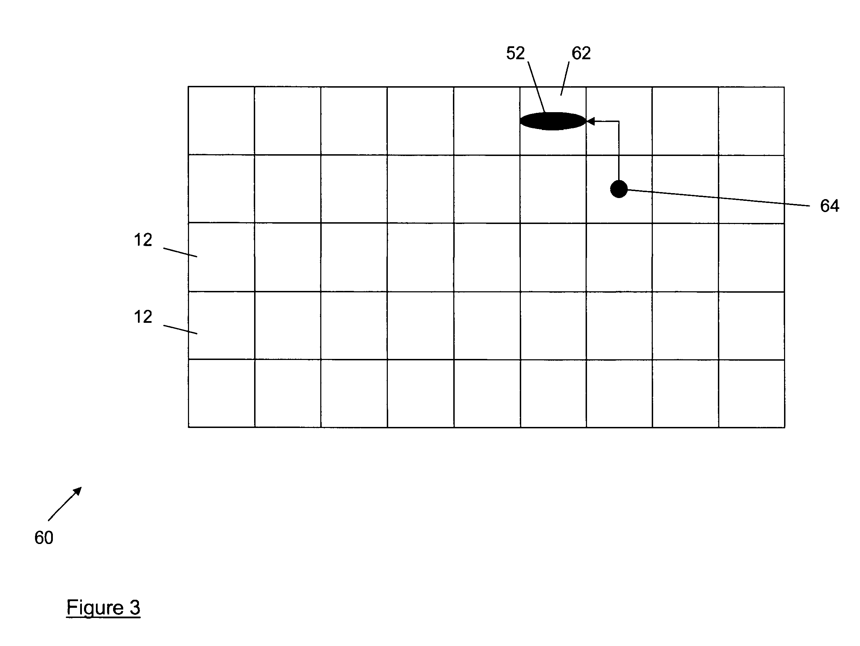

In the method of the present invention a search of a subsequent frame commences at a position in an area of the subsequent frame which relates to an area in the previous frame in which a region of interest was identified, as will now be described with reference to Figures 2 and 3.

In Figure 2 a spiral search performed on a first video frame 50 in a sequence has identified a region of interest 52 in a block 54 of the video frame 50. The position of the region of interest 52 is recorded for use in determining a position at which to commence a search of a subsequent frame of the sequence.

Figure 3 shows such a subsequent frame 60, in which the region of interest 52 has moved to a block 62. A spiral search of the subsequent frame 60 commences at a point 64, which corresponds to the position of the region of interest 52 in the first frame 50.

As the path of the spiral search when the region of interest 52 in the first frame 50 was identified was following an upward direction, the spiral search of the subsequent frame 60 preferably commences in an upward direction, as this is the likely direction of movement of the region of interest 52. If the path of the spiral search when the region of interest 52 in the first frame 50 was identified was following a different direction, the spiral search of the subsequent frame 60 would preferably commence in that different direction. The region of interest 52 is identified in the block 62, and its position is recorded for use in determining a position at which to commence a search of a subsequent frame in the sequence.

Alternatively, the spiral search of the subsequent frame 60 need not necessarily commence in the direction which was being followed by the spiral search of the first frame 50 when the region of interest 52 was identified. For example to simplify execution of the method the spiral search of the subsequent frame 60 may always commence in the same direction, for example upwards.

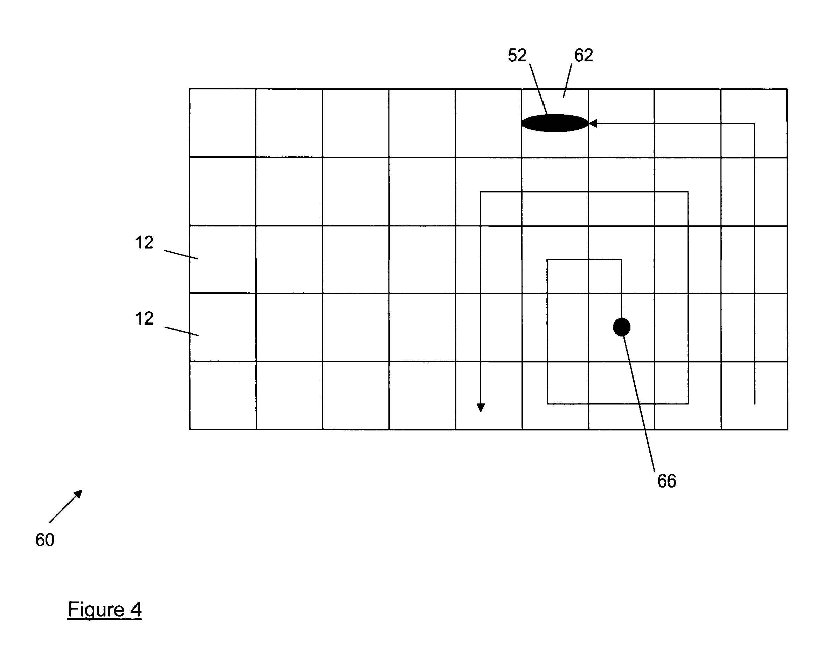

Figure 4 illustrates an alternative embodiment of the method, in which the spiral search of the subsequent frame 60 does not commence at a point in the subsequent frame 60 corresponding to the exact position at which the region of interest 52 was identified in the first frame 50, but commences in an area of the subsequent frame 60 which relates to the area in the first frame 50 in which the region of interest 52 was identified. In this example, a point corresponding to a position slightly further backwards on the spiral search path of the first frame 50 at which the region of interest 52 was identified is selected as the point 66 at which the search of the subsequent frame 60 commences. The reason for selecting the point 66 as the point at which to commence the search of the subsequent frame 60 is that it reduces the likelihood that an artefact occurring in the first frame 50 incorrectly identified as a region of interest by the search of the first frame 50 will "misdirect" the search of the second frame 60, as the search of the subsequent frame has to follow a longer spiral path than in the embodiment of Figure 3, processing more blocks of the subsequent frame 60, thus increasing the likelihood of correctly identifying a region of interest before identifying the incorrectly identified artefact of the first frame 50. Of course, the improved likelihood of correctly identifying a region of interest in the subsequent frame 60 comes at the expense of slightly increased processing time. However, this processing time is still reduced in comparison to the processing time required to perform a new spiral search of the subsequent frame 60 commencing at a central block of the subsequent frame 60.

It will be appreciated that the point 66 selected as the point at which the spiral search of the subsequent frame 60 commences may be any point in the subsequent frame 60 which is in an area of the subsequent frame 60 which relates to an area of the first frame 50 in which the region of interest 52 was identified. For example, the point 66 may correspond to any position on the spiral search path of the first frame 50 on which the region of interest was identified, except the position at which the spiral search of the first frame 50 commenced.

In either embodiment of the method, if the region of interest 52 identified by the search of the first frame 50 is located at a position in the first frame higher than the position at which the search of the first frame 50 commenced, i.e. if the region of interest 52 in the first frame 50 is located above the central block 14 of the first frame 50, it is likely that the region of interest 52 will have moved in an upward direction in the subsequent frame 60, and thus the search of the subsequent frame 60 may commence at a point slightly upwards of a point corresponding to the position of the region of interest 52 in the first frame 50, to reduce further the number of blocks of the subsequent frame 60 that must be processed, and thus the time taken, to identify the region of interest 52 in the subsequent frame 60. Similarly, if the region of interest 52 identified by the search of the first frame 50 is located at a position in the first frame lower than the position at which the search of the first frame 50 commenced, i.e. if the region of interest in the first frame 50 is located below the central block 14 of the first frame 50, it is likely that the region of interest 52 will have moved in a downward direction in the subsequent frame, and thus the search of the subsequent frame 60 may commence at a point slightly downwards of a point corresponding to the position of the region of interest 52 in the first frame 50, to reduce further the number of blocks in the subsequent frame 60 that must be processed.

The algorithm or method used to process the blocks of the first and subsequent frames 50, 60 will depend upon the type of region of interest to be identified, as will be apparent to those skilled in the art. For example, if inter-field motion is to be identified, a correlation between top and bottom fields of the frame may be performed.

Although the method of the present invention has been described in relation to a spiral search, it will be appreciated that it can also be used in conjunction with other search methods to reduce the processing time required to identify and track a region of interest in a sequence of video frames.

## Claims

1. A method of tracking a region of interest in a sequence of video frames, the method comprising performing a search to locate a region of interest in a first frame of the sequence and performing a search to locate a corresponding region of interest in a subsequent frame of the sequence, **characterised in that** the search in the subsequent frame is commenced in an area of the subsequent frame which relates to an area in the first frame in which a region of interest was identified by the search of the first frame.

2. A method according to claim 1 wherein the search of the subsequent frame is commenced at a position corresponding to a position at which a region of interest was identified by the search of the first frame.

3. A method according to claim 1 or claim 2 wherein the search of the first frame terminates when a region of interest is identified.

4. A method according to any one of the preceding claims wherein the search of the first frame and the search of the subsequent frame comprise spiral searches.

5. A method according to any one of the preceding claims wherein the search of the subsequent frame commences in a direction corresponding to a direction of the search of the first frame when the search of the first frame terminated.

6. A method according to any one of the preceding claims wherein the searches of the first frame and of the subsequent frame are performed in relation to blocks of pixels of each of the first and subsequent frames.

7. A computer program for performing the method of any one of claims 1 to 6.
